# EUROPEAN PATENT SPECIFICATION

(11) **EP 0 919 831 B1**
(45) Date of publication and mention of the grant of the patent: **28.09.2005**
(21) Application number: 98121682.3
(22) Date of filing: 13.11.1998
(51) Int. Cl.: G01S 7/491, G01S 17/74, G01S 17/66, G01C 15/00, E02F 3/84

(54) **Communication system for surveying instrument**
Kommunikationssystem für Vermessungsgerät
Système de communication pour instrument géodesique

(30) Priority: 14.11.1997 JP 31327597
(43) Date of publication of application: 02.06.1999
(73) Proprietor: Kabushiki Kaisha TOPCON, Tokyo 174-0052 (JP)
(72) Inventor: Kimura, Kazuaki c/o Kabushiki Kaisha Topcon, Tokyo 174-0052 (JP)
(74) Representative: Pfenning, Meinig & Partner GbR

(56) References cited:
- EP-A- 0 797 076
- EP-A- 0 811 727
- US-A- 4 681 433
- US-A- 4 830 489
- US-A- 4 983 021
- PATENT ABSTRACTS OF JAPAN vol. 018, no. 135 (P-1705), 7 March 1994 (1994-03-07) & JP 05 322569 A (TOPCON CORP), 7 December 1993 (1993-12-07)

## Description

### BACKGROUND OF THE INVENTION

### 1. Field of the Invention

The present invention relates to a communication system for tracking a tracking target.

### 2. Description of the Related Art

There has been heretofore known a surveying instrument for automatically tracking a tracking target by measuring a distance to the tracking target, a horizontal angle (hereinafter referred to as "horizontal angle") formed by a direction in which a tracking target is present with respect to a reference direction, and an angle of in a high-low direction (hereinafter referred to as "high-low direction") formed by a direction in which a tracking target is present with respect to a reference height.

EP 0 797 076 A2 discloses a surveying system comprising a surveying machine disposed at a reference point and a reflecting mirror disposed on the side of a target point. A signal-light projecting device disposed on the side of the target point projects a light beam onto the surveying machine.

A rough-direction detecting device and a precise direction detecting device receiving the light beam are disposed on the surveying machine and detect the direction in which the signal-light projecting device is located.

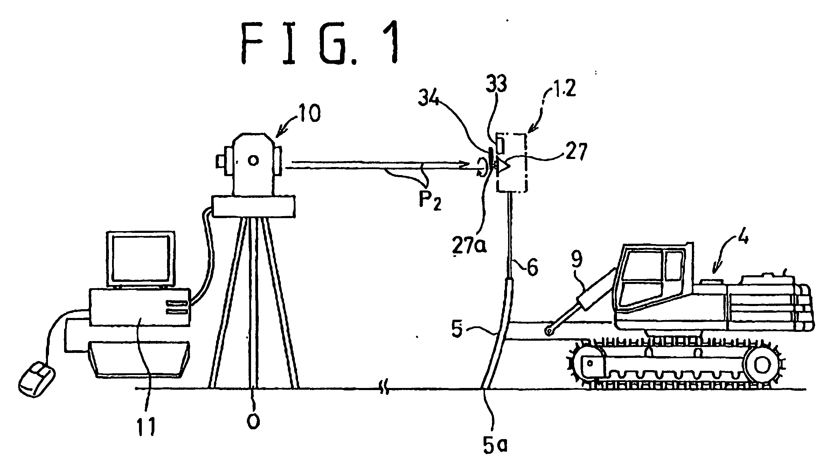

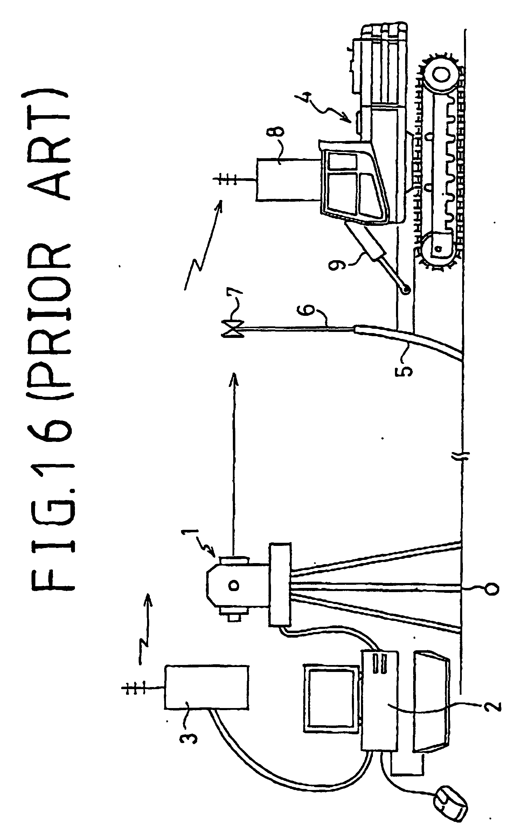

Fig. 16 shows a conventional communication system for a surveying instrument for automatically controlling a construction machine using an automatic tracking type survey unit. In Fig. 1, reference numeral 1 designates an automatic tracking type survey unit. The survey unit 1 is installed at a known point O set as a reference position in a working site. A personal computer 2 is connected to the survey unit 1, and a radio transmitter 3 is connected to the personal computer 2.

A bulldozer 4 as a construction machine is provided with a blade 5 as a ground levelling implement. A pole 6 is stood up on the blade 5, and a prism 7 used as a tracking target is provided on the pole 6. The bulldozer 4 is provided with a radio receiver 8 for receiving an electric wave transmitted from the radio transmitter 3.

Finished height data (described later) at respective horizonal coordinate positions in the working site are stored in the personal computer 2. The survey unit 1 tracks the prism 7 to measure the distance from the known point O to the prism 7, and the horizontal angle from the reference direction to the direction in which the prism 7 is present for determining a horizontal coordinate position of the prism 7 with the known point O as a reference. The data of the horizontal coordinate position are transmitted from the survey unit 1 to the personal computer 2.

The personal computer 2 reads out the finished height data of ground at the determined horizontal coordinate position to send them to the radio transmitter 3. The radio transmitter 3 transmits the finished height data, as information concerning the surveying work, to the radio receiver 8, and the bulldozer 4 controls the blade 5 by a hydraulic controller 9 on the basis of the finished height data received by the radio receiver 8. The blade 5 excavates or cuts the ground to form a finished plane of the designed finished height (executed height).

However, according to the conventional communication system as described between the surveying instrument side and the construction machine side, in the working site, generally, operators use transceivers to keep in contact with each other, and electric wave noises generated by the construction machine are present. Therefore, radio interference or communication trouble tends to occur in communication between the surveying instrument side and the construction machine side. Due to this fact, information concerning the surveying work transmitted by the surveying instrument is sometimes not transmitted accurately to the tracking target on the construction machine side. This problem can be solved by employing a communication system by way of modulation light which is hard to be affected by electric wave noises or the hke. However, no design is employed in which light emitting parts themselves are turned on and off by on/off control, but preferably, modulation light is produced without imposing a burden on the light emitting parts with a simple constitution.

### SUMMARY OF THE INVENTION

It is an object of this invention to provide a communication system for a surveying instrument in which communication by way of modulation light which is hard to generate radio interference or communication trouble even under the presence of electric wave noises can be accomplished with a simple constitution.

For achieving the aforementioned object, according to a first aspect of the present invention, there is provided a communication system for a surveying instrument in which a survey unit irradiates a tracking light towards a tracking target, the tracking light is reflected by the tracking target, a tracking light reflected from the tracking target is received by light receiving means in the survey unit to thereby track the tracking target, modulation means provided in an optical path of the tracking reflected light intermittently shields and modulates the tracking reflected light for transmitting information concerning a surveying work towards the survey unit, and demodulation means demodulates the tracking reflected light received by the light receiving element.

Thus, there is exhibited an effect that the survey unit communicates with the tracking target perform optical communication using the modulated tracking light, and information concerning the surveying work can be transmitted while avoiding radio interference or communication trouble even under the presence of electric wave noises or the like, and in addition, since the modulation is done by the intermittent shield of the tracking reflected light, the burden caused by turning on and off is not imposed on the light emitting parts for emitting the tracking light.

According to a second aspect of the present invention, there is provided a communication system for a surveying instrument in which the modulation means comprises a mechanical shutter.

Thus, there is exhibited an effect that the constitution can be simplified.

According to a third aspect of the present invention, there is provided a communication system for a surveying instrument in which the modulation means comprises a liquid crystal shutter.

Thus, there is exhibited an effect that complicated communication can be easily realized.

According to a fourth aspect of the present invention, there is provided a communication system for a surveying instrument in which the survey unit is installed at a known point to catch respective points of a working site on a coordinate with the known point regarded as a reference, a tracking target is provided on a leveling implement of a construction machine, the construction machine has ground leveling implement control means for controlling a ground leveling implement, the working site is leveled by the ground leveling implement to form a finished plane, finished height data memory means on the survey unit side stores heights from the known point at respective horizontal coordinate positions of the finished plane as finished height data, horizontal coordinate position determination means determines a horizontal coordinate position of the tracking target, arithmetic means operates a deviation from a target height of the tracking target at the horizontal coordinate position on the basis of the finished height data relative to the determined horizontal coordinate position, the deviation is transmitted as information concerning the surveying work towards the tracking target, and the ground leveling implement control means adjusts a height position of the ground leveling implement so that the tracking target is made closer to the target height on the basis of the result of reception of the tracking target whereby a ground at the determined horizontal coordinate position is leveled into the finished plane.

Thus, there is exhibited an effect that automated and efficient construction work can be accomplished.

According to a fifth aspect of the present invention, there is provided a communication system for a surveying instrument in which the survey unit irradiates a tracking light towards a tracking target, the tracking target reflects the tracking light, light receiving device in the survey unit receives a tracking reflected light from the tracking target to thereby track the tracking target, modulation means provided in an optical path of the tracking light intermittently shields and modulates the tracking light for transmitting information concerning the surveying work towards the tracking target, a light receiving element provided on the tracking target receives the tracking light, and demodulation means demodulates the tracking light received by the light receiving element.

Thus, there is exhibited an effect similar to that of the first aspect in that the survey unit communicates with the tracking target perform optical communication using modulated tracking light.

### BRIEF DESCRIPTION OF THE DRAWINGS

The above and other objects, features and advantages of the present invention will become apparent from the following description taken in connection with the accompanying drawings, in which:
Fig. 1 is an explanatory view of a communication system for a surveying instrument according to the present invention and applied to a construction work;
Fig. 2 is a schematic view of an automatic tracking type survey unit;
Fig. 3 is an optical view showing a schematic constitution of the interior of a lens barrel portion;
Fig. 4 is an explanatory view showing a schematic constitution of a tracking portion;
Fig. 5 is an explanatory view showing one example of the scanning by a tracking light;
Fig. 6 is an explanatory view showing a schematic constitution of a tracking unit;
Fig. 7 is a block diagram showing a modulation circuit of the survey unit;
Fig. 8 is an explanatory view showing one example of the tracking light modulated in the survey unit;
Fig. 9 is a block diagram showing an electric circuit for demodulation in the tracking unit;
Fig. 10 is an explanatory view showing one example of a tracking reflected light modulated in the tracking unit;
Fig. 11 is an explanatory view showing another example of a mechanical shutter;
Fig. 12 is an explanatory view showing another example of the tracking reflected light modulated in the tracking unit;
Fig. 13 is an explanatory view showing an example in which the mechanical shutter is replaced with a liquid crystal shutter;
Fig. 14 is an explanatory view showing another arrangement of a shutter;
Fig. 15 is an explanatory view showing the concept of a finished plane, a finished plane height, and a deviation; and
Fig. 16 is an explanatory view showing a conventional communication system for a surveying instrument applied to the construction work.

### DESCRIPTION OF THE PREFERRED EMBODIMENTS

Fig. 1 shows one embodiment of a communication system for a surveying instrument according to the present invention. In Fig. 1, reference numeral 10 designates an automatic tracking type survey unit; 11 designates a personal computer connected to the automatic tracking type survey unit 10; 4 designates a bulldozer as a construction machine for leveleing a working site; and 5 designates a blade as a ground leveling implement. The blade 5 is controlled by a hydraulic controller 9 as ground leveling implement control means, the blade 5 being provided with a tracking unit 12 as a tracking target.

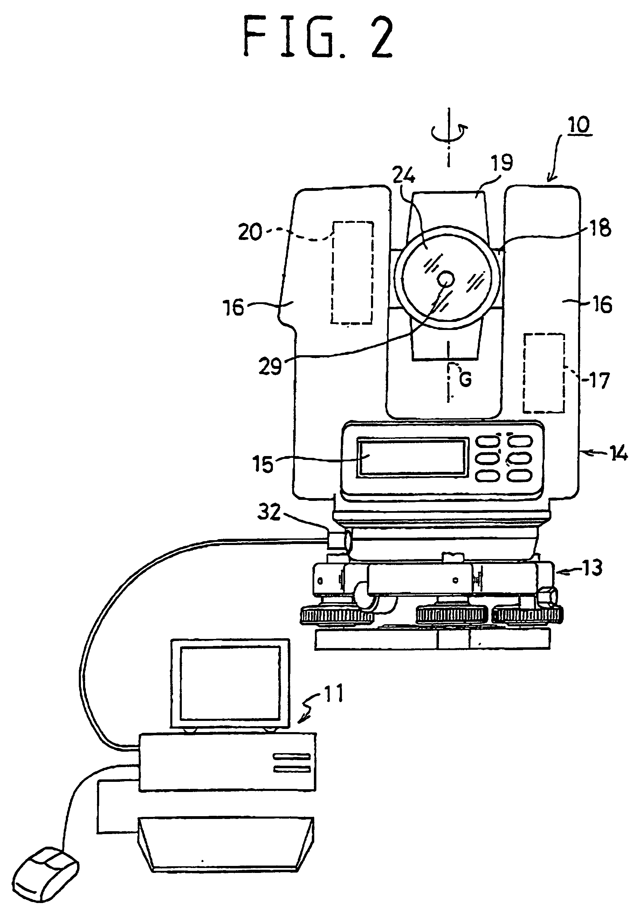

The surveying machine 10 comprises a base board portion 13 and an apparatus body portion 14, as shown in Fig. 2. The apparatus body portion 14 has a display portion 15 and a mount 16, and can be rotated within a horizontal plane about a vertical axis G by a horizontal rotational means 17. A horizontal shaft 18 is provided on the mount 16, and a lens barrel portion 19 is held on the horizontal shaft 18. The lens barrel portion 19 can be rotated within the vertical plane about the horizontal shaft 18 by a vertical rotational means 20. The rotational amount within the horizontal plane of the apparatus body portion 14 and the rotational amount within the vertical plane of the lens barrel portion 19 are detected by an angle reading device (a rotary encoder) not shown.

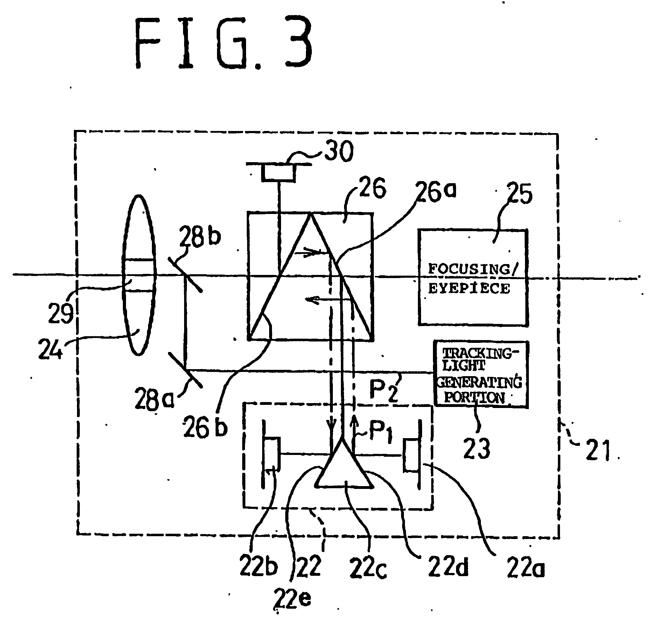

The lens barrel portion 19 is provided with a measuring and tracking unit portion 21 shown in Fig. 3. The measuring and tracking unit portion 21 has an electric distance measurement (hereinafter referred to as EDM portion) 22 for measuring the distance to the tracking unit 12, a horizontal tracking-light generating portion 23 (laser beam), and an objective lens 24 used in common for measurement and tracking. The objective lens 24 is provided in its center portion with a center hole 29 and is combined with an eyepiece 25 to constitute a telescope. A focal point is adjusted by the eyepiece 25 whereby an operator can see the tracking unit 12 through the telescope.

The EDM portion 22 schematically comprises a light emitting element 22a, a light receiving element 22b, and a split mirror 22c. A measuring light P1 modulated at a specific frequency is emitted from the light emitting element 22a for measuring the distance to a prism 27 (see Fig. 1) of the tracking unit 12. The measuring light P1 is reflected by a reflecting surface 22d of the split mirror 22c and a reflecting surface 26a of a dichroic mirror 26, passes through a lower half portion of the objective lens 24 and is guided to the prism 27. The measuring light P1 reflected by the prism 27 is condensed by an upper half portion of the objective lens 24, passes through the reflecting surface 26b of the dichroic mirror 26, reflected by the reflecting surface 26a and is guided to the light receiving element 22b by the reflecting surface 22e of the split mirror 22c. The EDM portion 22 is provided with a processing circuit not shown for operating a phase difference between a light emitting signal and a light receiving signal to obtain the distance to the prism 27 from the phase difference.

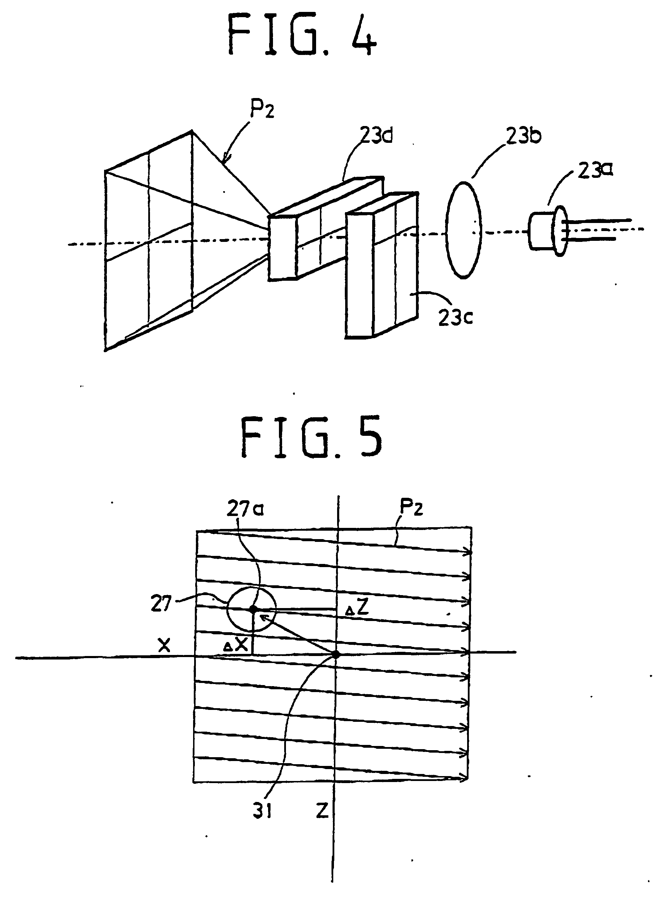

The generating portion 23 has a two-dimensional scanning portion for scanning a tracking light P2 in the two-dimensional direction of X-Z. The wavelength of the tracking light 2 is different from that of the measuring light P1, and the two-dimensional scanning portion is composed of a laser diode 23a for emitting the tracking light (laser beam) P2, a collimation lens 23b for converting the tracking light P2 into a parallel luminous flux, and acoustic optical elements 23c, 23d disposed to be crossed to each other, as shown in Fig. 4. The detailed constitution of the tracking portion is known, description of which is omitted. However, for example, see Fig. 3 of Japanese Patent Application Laid-Open No. 5-322569, if necessary. Note that the tracking light may be scanned by a combination of a rotary polygonal mirror and a galvanomirror.

According to the scanning of the laser beam as described, the tracking can be made even if the tracking unit 12 is located far away from the automatic tracking type survey unit 10 because a divergent angle of laser beam itself is narrow, and energy density of the tracking light P2 is high.

The tracking light P2 emitted from the two-dimensional scanning portion is reflected by a mirror 28a, and a mirror 28b, and directed at the prism 27 passing through the center hole 29 of the objective lens 24. The tracking reflected light P2 reflected by the prism 27 is condensed by the whole surface of the objective lens 24, reflected by the reflecting surface 26b of the dichroic mirror 26 and condensed by a light receiving element 30 as light receiving means.

In the measuring and tracking unit portion 21, the tracking light P2 is subjected to raster scanning in the direction of X-Z as shown in Fig. 5 to detect the position of the prism 27. In the raster scanning, suppose that for example, the horizontal scanning time of one line is 0.1 msec, and vertical scanning consists of 100 scanning lines, 10 msec is necessary to complete the whole scanning. In the processing circuit not shown connected to the light receiving element 30 provided on the automatic tracking type survey unit 10, which timing of scanning the tracking light P2 impinges upon the prism 27 is detected by the reception of light by the light receiving element 30 to measure deviations ΔX and ΔZ in the directions X and Z of the center position 27a of the prism 27 with respect to the scanning center 31. The measured deviations ΔX and ΔZ are converted into the rotational amount within the horizontal plane of the apparatus body portion 14 and the rotational amount within the vertical plane of the lens barrel portion 19, respectively, and the converted results are fed back to the respective rotational mechanisms 17 and 20. By the operation of the rotational mechanisms 17 and 20, the automatic tracking type survey unit 10 automatically collimates the center of the prism 27.

The automatic tracking type survey unit 10 houses a CPU not shown which functions as a part of the processing circuit. The CPU determines a horizontal coordinate position and a height coordinate position of the prism 27, that is, the tracking unit 12 on the basis of a distance to the prism 27, a horizontal angle and a high/low angle obtained by measurement. The determined horizontal coordinate position is displayed on the display portion 15 and output to an input/output port 32. The input/output port 32 is usually composed of a RS/232C (EIA) and is connected to the personal computer 11.

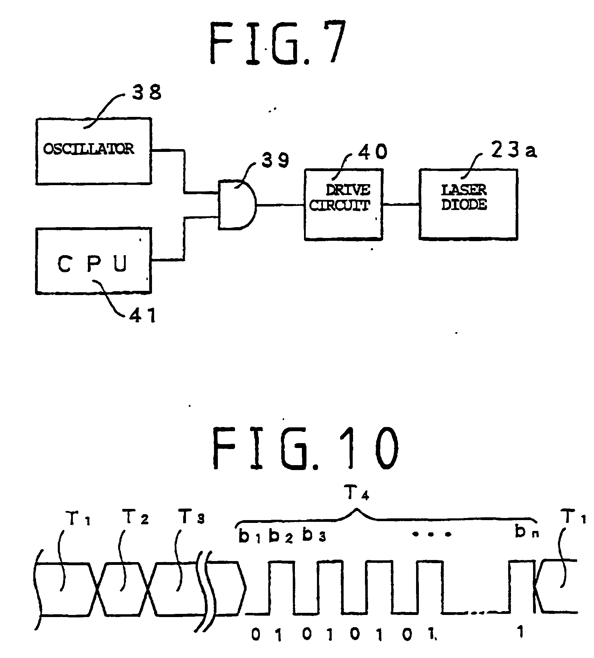

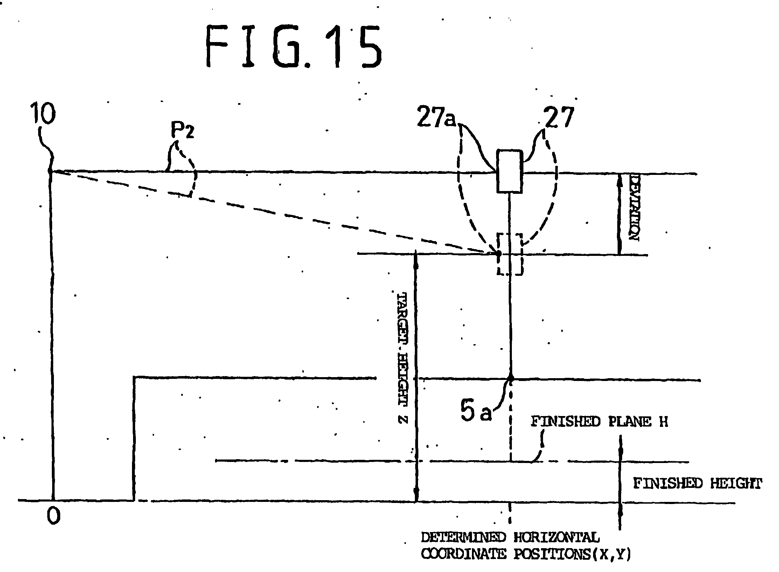

The personal computer 11 stores therein 3-dimensional design data of a working site and delivers and receives data between the CPU. The 3-dimensional design data of the working site herein termed is finished height data at each horizontal coordinate position of the working site, and the finished height data herein termed is data concerning a height of an expected finished plane H with respect to the known point O (see Fig. 15). The personal computer 11 outputs finished height data concerning the horizontal coordinate position input from the automatic tracking type survey unit 10, and the automatic tracking type survey unit 10 operates a deviation δ from a target height (a height at which the tracking unit 12 should be positioned when leveled to the finished height H) of the tracking unit 12 on the basis of the finished height data. This deviation δ is transmitted to the tracking unit 12 by the tracking light P2 modulated by a modulation circuit (see Fig. 7) of the automatic tracking type survey unit 10. This will be described in detail later.

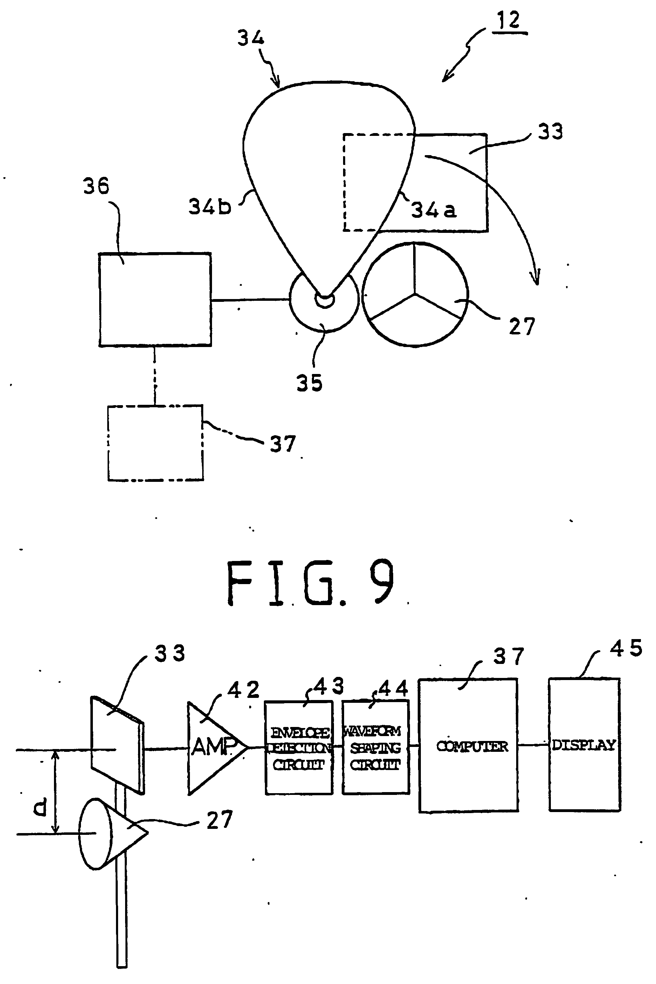

The tracking unit 12 is provided on the pole 6 stood upright on the blade 5 so that the former is positioned at a predetermined height on the blade 5. The tracking unit 12 comprises, as shown schematically in Fig. 6, a prism 27, a light receiving element 33 provided close to the upper part of the prism 27, a shutter 34 as modulation means, a pulse motor 35 for rotating the shutter 34, and a drive circuit 36 for controlling the driving of the pulse motor 35. The drive circuit 36 is connected to a computer 37 described later.

The shutter 34 is provided in an optical path of a tracking reflected light P2. When the shutter 34 rotates in a direction of arrow in the figure, the tracking reflected light P2 is shielded during a period of time from movement of its front edge 34 in a rotational direction into the tracking reflected light P2 to escape of a trailing edge 34b in a rotational direction from the optical path. The tracking reflected light P2 is modulated by the intermittent shield of the shutter 34.

The working procedure will be summarized and explained hereinafter.

The automatic tracking type survey unit 10 is installed on the known point O at a visible place of the working site and set as a reference position. A horizontal coordinate position of the known point O, a machine height of the automatic tracking type survey unit 10, and a height from the edge 5a of the blade 5 to the center position 27a of the prism 27 are input into the personal computer 11, and the surveying machine 10 is directed towards the prism 27 to operate the work.

The automatic tracking type survey unit 10 automatically tracks the prism 27, and the distance to the prism 27 is measured by the EDM portion 22. The horizontal coordinate positions X, Y of the prism 27 are determined from the measured data and the angle data by the rotary encoder not shown, and the automatic tracking type survey unit 10 outputs them to the personal computer 11.

The personal computer 11 obtains a target height Z of the tracking unit 12 in the horizontal coordinate positions X, Y on the basis of the finished height data. The personal computer 11 issues the automatic tracking type survey unit 10 instructions so that the automatic tracking type survey unit 10 may collimate points of the coordinates (X, Y and Z), and the vertical rotational means 20 rotates the lens barrel portion 19 in accordance with the instructions.

Upon termination of rotation of the lens barrel portion 19, the automatic tracking type survey unit 10 operates the deviation δ from the target height of the tracking unit 12. In the automatic tracking type survey unit 10, the tracking light P2 is demodulated by the modulation circuit for transmitting the deviation δ as information concerning the surveying work towards the light receiving element 33 of the tracking unit 12. Note that the deviation δ is output from the automatic tracking type survey unit 10 to the personal computer 11, and is recorded in a memory not shown as execution evaluation data.

The modulation circuit of the automatic tracking type survey unit 10 comprises an oscillator 38, a gate circuit 39, a drive circuit 40, and a CPU 41, as shown in Fig. 7. The oscillator 38 outputs a carrier wave; the gate circuit 39 demodulates serial data concerning the deviation δ from the CPU 41; the drive circuit 40 causes the laser diode 23a to light-emit while being based on the serial data; and the modulated tracking light P2 is delivered to the light receiving element 33 accompanied with information of the deviation δ.

According to the optical communication by way of modulation of the tracking light as described, the survey unit is able to transmit information towards the tracking target while avoiding radio interference or communication trouble even under the presence of electric wave noises.

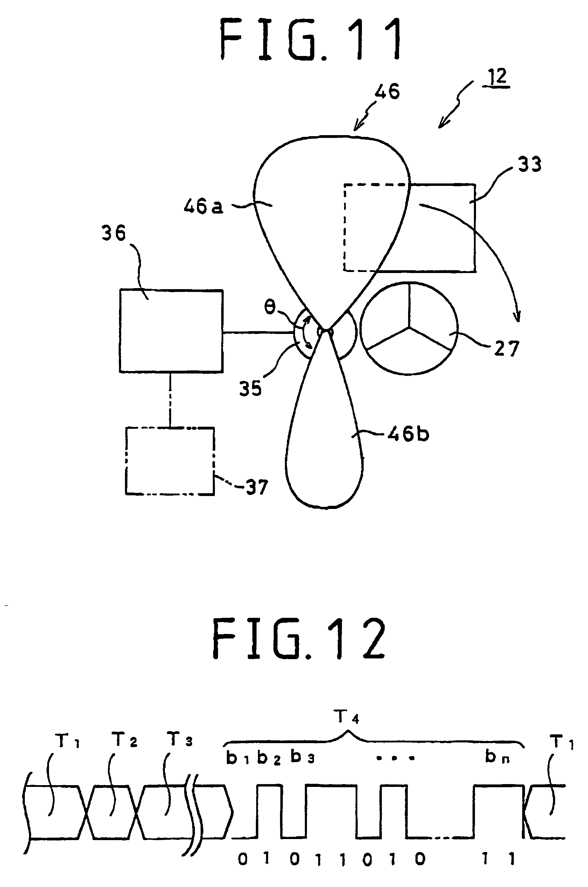

The data transmission in the automatic tracking type survey unit 10 is carried out with the tracking light P2 redirected at the tracking unit 12 after completion of full scanning. In this embodiment, since the light receiving element 33 is arranged above the prism 27, it is desirable that for carrying out the transmission with accuracy, the tracking light P2 is not directed at the center position 27a of the prism 27 but directed at the light receiving element 33 somewhat thereabove. How much the tracking light P2 is deflected upwardly from the center position 27a can be easily computed since an offset d (see Fig. 9) in a height direction between the prism 27 and the light receiving element 33 is known, and the distance from the known point O to the prism 27 has been already measured by the automatic tracking type survey unit 10.

While in the present embodiment, the automatic tracking type survey unit 10 tracks the tracking unit 12 also in a high-low direction (a vertical direction), it is to be noted that the automatic tracking type survey unit 10 cannot track in the aforesaid direction but can track only the movement in the horizontal direction of the tracking unit 12. In such a case as described, the positions of the prism 27 of the tracking unit 12 and the light receiving element 33 are not always the same as a collimation axis of the automatic tracking type survey unit 10, but at the time when the raster scanning is carried out for tracking, how the prism 27 is deviated with respect to the collimation axis can be judged, and therefore, the modulated tracking light P2 can be deflected according to the deviation for communication.

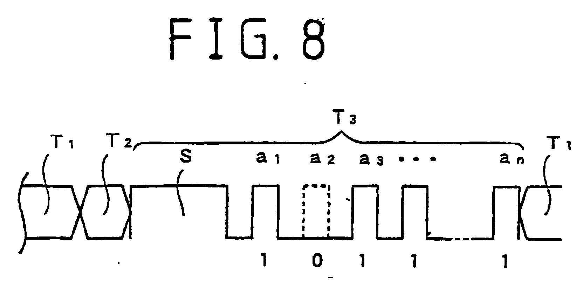

Fig. 8 shows the tracking light P2 modulated by an ASK system, as one example of modulation of the aforementioned modulation circuit. In Fig. 8, reference numeral T1 designates a period during which raster scanning is carried out for tracking to detect a position of the prism 27; T2 designates a period during which the tracking light P2 is deflected towards the light receiving element 33; and T3 designates a period during which data communication is carried out from the automatic tracking type survey unit 10 toward the tracking unit 12.

In the period T3, S indicates a synchronous pattern representative of a start of a data block, and a1, a2, a3, ... indicate output levels of the tracking light P2 output in bit serial (hereinafter referred to as "bit corresponding outputs"). A train of continuous pulse signals whose duty ratio is 50% are constituted by the bit corresponding outputs a1, a2, a3, ... The synchronous pattern S has the time width larger several times or more than the width of the period during which the bit corresponding outputs a1, a2, a3, ... occur so that it is detected with ease. Here, the time width of the synchronous pattern S is 1 msec, the time width of each of the bit corresponding outputs a1, a2, a3, ... is 0.1 msec, the width of the predetermined time for dividing the bit corresponding outputs is 0.1 msec, and the time it takes for data communication of 10 bits is 3 msec. On the other hand, since approximately 10 msec is necessary for the raster scanning for tracking as mentioned above, the time for data communication poses no problem with respect to the tracking.

The modulated tracking light P2 from the automatic tracking type survey unit 10 is received by the light receiving element 33, and after this, is processed in the electric circuit shown in Fig. 9. More specifically, a received signal of the light receiving element 33 are amplified to a suitable level by an amplifier 42, a carrier wave thereof being removed by an envelope detection circuit 43, shaped by a wave shaping circuit 44 and after this input into a computer 37. The computer 37 detects the synchronous pattern S for which "1" continues for a given period of time or more, and judges whether signals input every given period are "0" or "1" from the rising-down timing of the synchronous pattern S detected to thereby demodulate data. The computer 37 outputs the demodulated data to a display 45 or an output connector not shown.

Note that the tracking light P2 during raster scanning is also incident on the light receiving element 33, but since this is not incident continuously as compared with the synchronous pattern S, it comprises no dominant cause of impeding the detection of the synchronous pattern S. Further, the measured light P1 is also incident on the light receiving element 33. However, if carrier-wave frequency for transmission of data is differentiated from modulation frequency (normally, 15 MHz and 75 kHz are used) of the EDM portion 22 and a filter circuit is provided to discriminate frequencies from each other, the measured light P1 can be discriminated from the modulated tracking light P2. Therefore, it also comprises no dominant cause of impeding the detection of the synchronous pattern S.

The bulldozer 4 activates the hydraulic controller 9 on the basis of data of the deviation δ received by the tracking unit 12 to adjust a height position of the blade 5 so that the tracking unit 12 is made closer to a target height. The ground is leveled by the blade 5 of which height position is adjusted whereby the ground of the working site is gradually excavated closer to a finished height, finally forming a finished plane H.

On the other hand, the drive circuit 36 of the tracking unit 12 is operated on the basis of the operating conditions of the bulldozer 4 to rotate the shutter 34 so that the shutter 34 intermittently shields the tracking reflected light P2, whereby the tracking reflected light P2 is modulated to reach the automatic tracking type survey unit 10. In this embodiment, the automatic tracking type survey unit 10 is provided with various operating modes, which can be switched to an adequate operating mode according to the operating conditions of the bulldozer 4 by the modulated tracking reflected light P2.

That is, when the operating mode of the surveying machine 10 is selected and switched automatically or manually by a switching switch not shown provided on the bulldozer 4 side, operating mode switching information from the switch is delivered as a serial signal to the drive circuit 36 through the computer 37, the rotation of the shutter 34 is controlled by the control circuit 36 so that the operating mode switching information may ride on the tracking reflected light P2, and the tracking reflected light P2 is modulated by the intermittent shield of the shutter 34. The tracking reflected light P2 modulated is received by the light receiving element 30 in the automatic tracking type survey unit 10. An operating mode control circuit not shown is connected to the light receiving element 30. The operating mode control circuit plays a part as modulation light demodulating means for demodulating modulation light received. The operating mode control circuit sends a control signal on the basis of the result of demodulation, and the operating mode of the automatic tracking type survey unit 10 is switched in response to the control signal.

Fig. 10 shows an example of modulation of the tracking reflected light P2 using the shutter 34. Since the light receiving element 30 for tracking is jointly used for reception of data in the automatic tracking type survey unit 10, when an attempt is made to receive data during the tracking operation (during a period for detecting a position of a prism), the tracking reflected light P2 used for tracking is modulated to possibly lead to trouble in detecting a position of the tracking unit 12. Further, even if the modulation using the shutter 34 is carried out during a period while the automatic tracking type survey unit 10 transmits data towards the tracking unit 12, the light P2 already modulated at the time when irradiated to the prism 27 is further modulated by the shutter 34 so that the light receiving element 30 is to receive an unexpected modulation light not corresponding to the serial signal, failing to adequately control the operation of the automatic tracking type survey unit 10. Accordingly, This modulation using the shutter 34 is necessary to be carried out after completion of data transmission from the automatic tracking type survey unit 10, that is, during a period T4 except periods T1, T2 and T3 as shown in Fig. 8.

In period T4, b1, b2, b3, ... indicate output levels of the tracking reflected light P2 output in bit serial (hereinafter referred to as "bit corresponding outputs"). In the state that the tracking reflected light P2 is not shielded by the shutter 34, a high level "1" is output, and in the state being shielded, a low level "0" is output. The bit corresponding outputs b1, b2, b3, ... represent data comprising binary numbers (0, 1, 0, 1, ...), which data are received in the automatic tracking type survey unit 10. The number of rotation of the shutter 34 and rotational speed are controlled according to the contents of the operating mode switching information to differentiate data represented by the bit corresponding outputs from each other.

Since in the period T4, synchronization has been already taken by the synchronous pattern S in the period T3, it is not necessary to secure such a synchronous pattern as described. Therefore, it will suffice that in the tracking unit 12, the synchronous pattern S is detected, data relative to the deviation δ is received, and after this, rotation of the shutter 34 is started past a predetermined time to deliver data for controlling operating mode of the automatic tracking type survey unit 10. On the other hand, the automatic tracking type survey unit 10 starts receiving of data from the tracking unit 12 past a predetermined time. The received data of the automatic tracking type survey unit 10 is demodulated by the processing similar to that shown in Fig. 9 in the operating mode control circuit.

Note that for carrying out more complicated data communication, it is contemplated that for example, a shutter 46 shown in Fig. 11 is used. In this shutter 46, a plurality of shield plates having different width in a rotational direction (in Fig. 11, two shield plates 46, 46b) are provided on a rotational shaft a pulse motor 35 so that an angle θ formed by the respective shield plates can be freely changed. Fig. 12 shows one example of the data communication using the shutter 46.

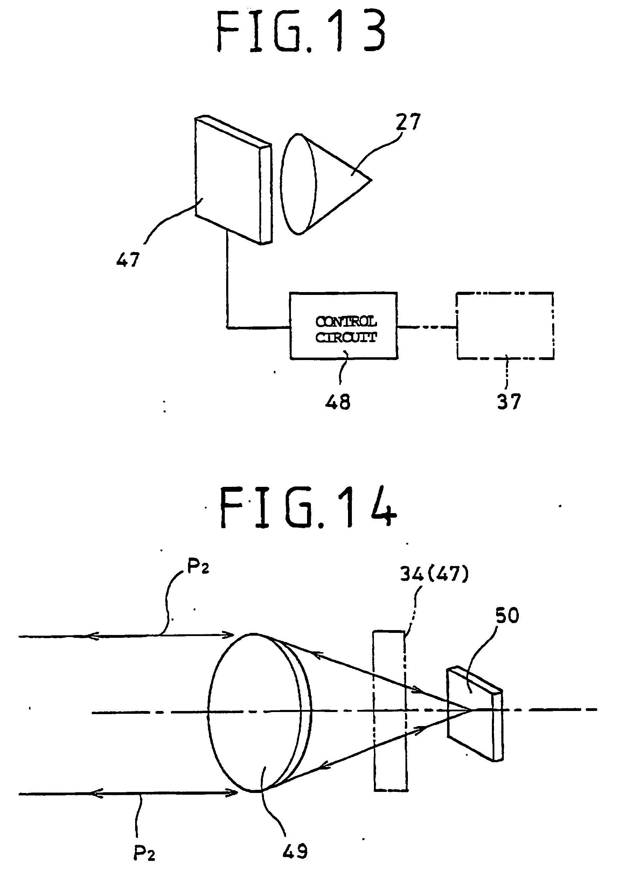

While in the above-described embodiments, a mechanical shutter has been used as modulation means in the tracking unit 12, it is to be noted that a liquid crystal shutter 47 is arranged on the front surface of the prism 27 as shown in Fig. 13, which can be used as modulation means. A computer 37 is connected to the liquid crystal shutter 47 through a control circuit 48.

When operating mode switching information of the automatic tracking type survey unit 10 is delivered as a serial signal to the control circuit 48 from the computer 37, the control circuit 48 controls the transmission and shield of the liquid crystal shutter 47 so that the operating mode switching information may ride on the tracking reflected light P2 whereby the tracking reflected light P2 is modulated. According to such a liquid crystal shutter as described, a shutter driving mechanism is eliminated to achieve space saving, and in addition, the complicated data communication as illustrated in Fig. 12 can be easily realized.

Alternatively, instead of employing the design in which the shutter is arranged on the front surface of the prism as in the aforementioned embodiments, an objective lens 49 and a reflecting mirror 50 can be used in place of the prism 27 as shown in Fig. 14, and a shutter is arranged therebetween. In this example, the reflecting mirror 50 is provided at a focal point of the objective lens 49, and a mechanical shutter or a liquid crystal shutter is provided near the reflecting mirror 50 between the objective lens 49 and the reflecting mirror 50 to intermittently shield the tracking reflected light P2. This arrangement of the shutter near the focal point position provides an advantage in that a shield area of the shutter is small, and the response can be made at high speeds.

Alternatively, a mechanical shutter or a liquid crystal shutter can be used in place of the modulation circuit in the automatic tracking type survey unit 10 to modulate the tracking light P2.

Although the invention has been described in its preferred form with a certain degree of particularity, obviously many changes and variations are possible therein. For example, the survey unit or the modulation means in the tracking target are not limited to those illustrated, but any device other than the shutter may be employed as long as they can modulate the tracking light and tracking reflected light by the intermittent shield. Further, as the modulation/demodulation system, known systems (such as PSK system) other than the ASK system can be used.

## Claims

1. A communication system for a surveying instrument, comprising:
a tracking target (12) for reflecting a tracking light (P2) therefrom; and
a survey unit (10) for irradiating said tracking light (P2) towards said tracking target (12) and receiving the tracking light (P2) reflected from said tracking target (12) using light receiving means (30) to thereby track said tracking target (12), **characterized in that**
said system includes modulation means provided in an optical path of said reflected tracking light (P2) to modulate by intermittently shielding of said reflected tracking light (P2) for transmitting information concerning a surveying work towards said surveying unit (10); and
demodulation means for demodulating said reflected tracking light (P2) received by said light receiving means (30).

2. The communication system for a surveying instrument according to claim 1, **characterized in that** said tracking target (12) is provided on a construction machine (4), and said information concerning the surveying work is information for controlling operation of said survey unit (10) on the basis of the operating conditions of said construction machine (4).

3. The communication system for a surveying instrument according to claim 1 or 2, **characterized in that** said modulation means comprises a mechanical shutter (34).

4. The communication system for a surveying instrument according to claim 1 or 2, **characterized in that** said modulation means comprises a liquid crystal shutter (47).

5. A communication system for a surveying instrument, comprising:
a tracking target (12) for reflecting a tracking light (P2) therefrom; and
a survey unit (10) for irradiating said tracking light (P2) towards said tracking target (12) and receiving a tracking light (P2) reflected from said tracking target (12) by light receiving means (30) to thereby track said tracking target (12), **characterized in that**
said system includes modulation means provided in an optical path of said tracking light (P2) to modulate by intermittently shielding of said tracking light (P2) for transmitting information concerning a surveying work towards said tracking target;
a light receiving element (33) provided on said tracking target (12) to receive said tracking light; and
demodulation means for demodulating said tracking light received by said light receiving element (33); and **characterized in that**
said survey unit (10) is installed at a known point (O), respective points of a working site are grasped by co-ordinates with said known point (O) as a reference, said tracking target (12) is provided on a ground levelling implement (5) of a construction machine (4),
said construction machine (4) has ground levelling implement control means (9) for controlling said ground levelling implement (5) so that said working site is levelled by said ground levelling implement (5) to form a finished plane (H);
said survey unit (10) has finished height data memory means for storing a height from said known point (O) at each horizontal co-ordinate position of said finished plane (H) as finished height data, horizontal co-ordinate position determination means for determining a horizontal co-ordinate position of said tracking target (12), and arithmetic means for calculating a deviation (δ) from a target height of said tracking target (12) at said horizontal co-ordinate position on the basis of the finished height data with respect to the determined horizontal co-ordinate position;
said deviation (δ) is transmitted as information concerning the surveying work towards said tracking target (12), and said ground levelling implement control means (9) adjusts a height position of said ground levelling implement (5) so that said tracking target (12) comes closer to said target height on the basis of the received result of said tracking target (12) whereby the ground at said determined horizontal co-ordinate position is levelled into said finished plane (H).

6. The communication system for a surveying instrument according to claim 5, **characterized in that** said modulation means comprises a mechanical shutter.

7. The communication system for a surveying instrument according to claim 5, **characterized in that** said modulation means comprises a liquid crystal shutter.

## Patentansprüche

1. Kommunikationssystem für ein Vermessungsgerät, umfassend:
ein Verfolgungsziel (12) zum Reflektieren eines Verfolgungslichtes (P2); und
eine Vermessungseinheit (10) zum Abstrahlen des Verfolgungslichtes (P2) zu dem Verfolgungsziel (12) und Empfangen des von dem Verfolgungsziel (12) reflektierten Verfolgungslichts (P2) unter Verwendung von Lichtempfangsmitteln (30), um dabei das Verfolgungsziel zu verfolgen (12), **dadurch gekennzeichnet, dass**
das System einschließt: Modulationsmittel, die in einem optischen Weg des reflektierten Verfolgslichts (P2) vorgesehen sind, um das reflektierte Verfolgungslicht (P2) durch intermittierendes Abschirmen zu modulieren für eine Übertragung von Informationen bezüglich der zu vermessenden Arbeit zu der Vermessungseinheit (10); und
Demodulationsmittel zum Demodulieren des von den Lichtempfangsmitteln (30) empfangenen reflektierten Verfolgungslichts(P2).

2. Kommunikationssystem für ein Vermessungsgerät nach Anspruch 1, **dadurch gekennzeichnet, dass** das Verfolgungsziel (12) an einer Baumaschine (4) vorgesehen ist und die Information bezüglich der Vermessungsarbeit eine Information zur Steuerung der Betriebsweise der Vermessungseinheit (10) auf der Grundlage der Betriebsbedingungen der Baumaschine (4) ist.

3. Kommunikationssystem für ein Vermessungsgerät nach Anspruch 1 oder Anspruch 2, **dadurch gekennzeichnet, dass** die Modulationsmittel eine mechanische Blende (34) umfassen.

4. Kommunikationssystem für ein Vermessungsgerät nach Anspruch 1 oder Anspruch 2, **dadurch gekennzeichnet, dass** die Modulationsmittel eine Flüssigkristallblende (47) umfassen.

5. Kommunikationssystem für ein Vermessungsgerät, umfassend:
ein Verfolgungsziel (12) zum Reflektieren eines Verfolgungslichtes (P2); und
eine Vermessungseinheit (10) zum Abstrahlen des Verfolgungslichtes (P2) zu dem Verfolgungsziel (12) und Empfangen des von dem Verfolgungsziel (12) reflektierten Verfolgungslichts (P2) unter Verwendung von Lichtempfangsmitteln (30), um dabei das Verfolgungsziel zu verfolgen (12), **dadurch gekennzeichnet, dass**
das System umfasst: Modulationsmittel, die in einem optischen Weg des Verfolgslichts (P2) vorgesehen sind, um das Verfolgungslicht (P2) durch intermittierendes Abschirmen zu modulieren für eine Übertragung von Informationen bezüglich der zu vermessenden Arbeit zu der Vermessungseinheit (10);
ein Lichtempfangselement (33), das an dem Verfolgungsziel (12) vorgesehen ist, um das Verfolgungslicht zu empfangen; und
Demodulationsmittel zum Demodulieren des von dem Lichtempfangselement (33) empfangenen Verfolgungslichts; und **dadurch gekennzeichnet, dass** die Vermessungseinheit (10) an einem bekannten Punkt (O) installiert ist, wobei jeweilige Punkte einer Baustelle durch Koordinaten abgetastet werden mit dem bekannten Punkt (O) als Referenz, wobei das Verfolgungsziel (12) an einem Bodennivelliergerät (5) einer Baumaschine (4) vorgesehen ist,
die Baumaschine (4) Bodennivelliergerätsteuermittel (9) zur Steuerung des Bodennivelliergerätes (5) aufweist, so dass die Baustelle von dem Bodennivelliergerät (5) nivelliert wird, um eine fertige Ebene (H) zu bilden;
die Vermessungseinheit (10) Endhöhendatenspeichermittel zum Speichern einer Höhe ausgehend von dem bekannten Punkt (O) bei jeder Horizontalkoordinatenposition der fertigen Ebene (H) als Endhöhendaten, Horizontalkoordinatenpositions-Bestimmungsmittel zum Bestimmen einer Horizontalkoordinatenposition des Verfolgungsziels (12) und arithmetische Mittel zum Berechnen einer Abweichung (δ) von einer Zielhöhe des Verfolgungsziels (12) bei der Horizontalkoordinatenposition auf der Grundlage der Endhöhendaten in Bezug auf die bestimmte Horizontalkoordinatenposition aufweist; wobei
die Abweichung (δ) als Information bezüglich der Vermessungsarbeit zu dem Verfolgungsziel (12) übertragen wird und die Steuermittel (9) für das Bodennivelliergerät eine Höhenposition des Bodennivelliergeräts (5) auf der Grundlage des empfangenen Ergebnisses des Verfolgungsziels (12) einstellt, derart, dass das Verfolgungsziel (12) näher an die Zielhöhe herankommt, wodurch der Boden an der bestimmten Horizontalkoordinatenposition auf die fertigen Ebene (H) nivelliert wird.

6. Kommunikationssystem für ein Vermessungsgerät nach Anspruch 5, **dadurch gekennzeichnet, dass** die Modulationsmittel eine mechanische Blende umfassen.

7. Kommunikationssystem für ein Vermessungsgerät nach Anspruch 5, **dadurch gekennzeichnet, dass** die Modulationsmittel eine Flüssigkristallblende umfassen.

## Revendications

1. Système de communication pour un instrument géodésique, comprenant :
une cible de poursuite (12) pour réfléchir une lumière de poursuite (P2) à partir de celle-ci ; et
une unité géodésique (10) pour émettre ladite lumière de poursuite (P2) en direction de ladite cible de poursuite (12) et recevoir la lumière de poursuite (P2) réfléchie depuis ladite cible de poursuite (12) en utilisant un moyen de réception de la lumière (30) pour suivre ainsi ladite cible de poursuite (12), **caractérisé en ce que**
ledit système inclut un moyen de modulation fourni dans un trajet optique de ladite lumière de poursuite réfléchie (P2) pour moduler en la couvrant par intermittence ladite lumière de poursuite réfléchie (P2) pour transmettre des informations concernant un travail géodésique en direction de ladite unité géodésique (10) ; et
un moyen de démodulation pour démoduler ladite lumière de poursuite réfléchie (P2) reçue par ledit moyen de réception de la lumière (30).

2. Système de communication pour un instrument géodésique selon la revendication 1, **caractérisé en ce que** ladite cible de poursuite (12) est fournie sur une machine de construction (4), et lesdites informations concernant le travail géodésique sont des informations pour commander le fonctionnement de ladite unité géodésique (10) sur la base des conditions de fonctionnement de ladite machine de construction (4).

3. Système de communication pour un instrument géodésique selon la revendication 1 ou 2, **caractérisé en ce que** ledit moyen de modulation comprend un obturateur mécanique (34).

4. Système de communication pour un instrument géodésique selon la revendication 1 ou 2, **caractérisé en ce que** ledit moyen de modulation comprend un obturateur à cristaux liquides (47).

5. Système de communication pour un instrument géodésique, comprenant :
une cible de poursuite (12) pour réfléchir une lumière de poursuite (P2) à partir de celle-ci ; et
une unité géodésique (10) pour émettre ladite lumière de poursuite (P2) en direction de ladite cible de poursuite (12) réfléchie et recevoir une lumière de poursuite (P2) réfléchie depuis ladite cible de poursuite (12) par le moyen de réception de la lumière (30) pour suivre ainsi ladite cible de poursuite (12), **caractérisé en ce que**
ledit système inclut un moyen de modulation fourni dans un trajet optique de ladite lumière de poursuite réfléchie (P2) pour moduler en la couvrant par intermittence ladite lumière de poursuite réfléchie (P2) pour transmettre des informations concernant un travail géodésique en direction de ladite cible de poursuite ;
un élément de réception de la lumière (33) fourni sur ladite cible de poursuite (12) pour recevoir ladite lumière de poursuite ; et
un moyen de démodulation pour démoduler ladite lumière de poursuite reçue par ledit élément de réception de la lumière (33) ; et **caractérisé en ce que**
ladite unité géodésique (10) est installée à un point connu (O), des points respectifs d'un chantier étant saisis par coordonnées avec ledit point (O) comme référence, ladite cible de poursuite (12) étant fournie sur un outil de nivellement du sol (5) d'une machine de construction (4), ladite machine de construction (4) ayant un moyen de commande de l'outil de nivellement du sol (9) pour commander ledit outil de nivellement du sol (5) de telle sorte que ledit chantier est nivelé par ledit outil de nivellement du sol (5) pour former un plan fini (H) ;
ladite unité géodésique (10) a un moyen de mémorisation des données de hauteur finie pour stocker une hauteur à partir dudit point connu (O) à chaque position en coordonnées horizontales dudit plan fini (H) en tant que données de hauteur, un moyen de détermination de la position en coordonnées horizontales pour déterminer une position en coordonnées horizontales de ladite cible de poursuite (12), et un moyen arithmétique pour calculer un écart (δ) par rapport à une hauteur cible de ladite cible de poursuite (12) à sa position en coordonnées horizontales sur la base des données de hauteur finie par rapport à la position en coordonnées horizontales déterminée ;
ledit écart (δ) est transmis en tant qu'informations concernant le travail géodésique en direction de ladite cible de poursuite (12), et ledit moyen de commande de l'outil de nivellement du sol (9) s'ajustant à une position en hauteur dudit outil de nivellement du sol, de telle sorte que ladite cible de poursuite (12) se rapproche de ladite hauteur cible sur la base du résultat reçu de ladite cible de poursuite (12) grâce à quoi le sol, à ladite position en coordonnées horizontales déterminée, est aplani en un plan fini (H).

6. Système de communication pour un instrument géodésique selon la revendication 5, **caractérisé en ce que** ledit moyen de modulation comprend un obturateur mécanique.

7. Système de communication pour un instrument géodésique selon la revendication 5, **caractérisé en ce que** ledit moyen de modulation comprend un obturateur à cristaux liquides.
